# EUROPÄISCHE PATENTSCHRIFT

(11) **EP 0 475 069 B1**
(45) Veröffentlichungstag und Bekanntmachung des Hinweises auf die Patenterteilung: **12.06.1996**
(21) Anmeldenummer: 91113118.3
(22) Anmeldetag: 05.08.1991
(51) Int. Cl.: C03B 5/42, F27D 1/04, F23M 5/02

(54) **Auskleidung bzw. Auskleidungsstein**
Refractory lining and brick
Revêtement et brique réfractaires

(30) Priorität: 08.09.1990 DE 4028612
(43) Veröffentlichungstag der Anmeldung: 18.03.1992
(73) Patentinhaber: DIDIER-WERKE AG, D-65189 Wiesbaden (DE)
(72) Erfinder: Wieland, Klaus, W-6200 Wiesbaden (DE); Schmalenbach, Bernhard, W-6200 Wiesbaden (DE); Schlacht, Dieter, W-6204 Taunusstein 4 (DE)
(74) Vertreter: Brückner, Raimund, Dipl.-Ing.

(56) Entgegenhaltungen:
- DE-A- 1 433 748
- US-A- 4 213 753
- SOVIET INVENTIONS ILLUSTRATED,Sektion Ch, Woche 8651, Seite 5, 4. Februar 1987 DERWENT PUBLICATIONS LTD., London, M24 * SU-1 227 926 (SHCHELOKOV A I ) *

## Beschreibung

Die Erfindung betrifft die Verwendung einer Auskleidung für einen Glasschmelzofen nach dem Oberbegriff des Anspruchs 1 oder 8 bzw. die Verwendung eines Auskleidungssteins für einen Glasschmelzofen nach dem Oberbegriff des Anspruchs 13 oder 14.

Eine derartige Auskleidung bzw. ein derartiger Auskleidungsstein ist aus der US-A- 4 213 753 (bzw. der DE-B- 2 814 250) bekannt. Die Vertiefungen sollen danach so gestaltet sein, daß die Wärmereflektionsflächen möglichst groß sind. Hierfür sind die Vertiefungen pyramiden- oder kegelstumpfförmig ausgebildet, wobei der innenraumseitige Öffnungsquerschnitt der Vertiefung den größten Querschnitt der Vertiefung bildet. Dadurch soll ein möglichst großer Anteil der auf die Auskleidung treffenden Wärmestrahlung direkt auf das zu schmelzende Glas reflektiert werden, um den Wirkungsgrad des Ofens zu erhöhen. Bei einer solchen reflektierten Flammen- bzw. Gasstrahlung erfolgt jedoch ein hoher Anteil an Reabsorbtion in der Flamme bzw. den im Ofeninnenraum befindlichen Verbrennungsgasen. Ein beachtlicher Teil der reflektierten Strahlungswärme kann daher das zu schmelzende Gut wegen Reabsorption in der Flamme bzw. der Gasatmosphäre des Ofeninnenraums nicht erreichen, so daß auch eine Vergrößerung der Wärmereflektion an der Auskleidung zu keiner weiteren Verbesserung des Schmelzprozesses führt.

Aus der DE-A- 1 4 33 748 ist es für metallurgische Öfen an sich bekannt, den schnellen Verschleiß der Ofenauskleidung durch Einblasen von Luft und Bildung eines Luftkissens unter dem Gewölbe zu verhindern. Hierzu ist ein Rohrleitungssystem in der Ofenauskleidung vorgesehen, welches über gemeinsam einen Gasführungskanal bildende Nuten in den einander zugekehrten Seitenflächen benachbarter Auskleidungssteine in den Ofeninnenraum mündet.

Aus SOWIET INVENTION ILLUSTRATED, Section Ch, Woche 8651, S. 5, 04.02.1987, DERWENT PUBLICATIONS Ltd., London, M 24 SU 1 227 926 ist es bekannt, in dem Gewölbe eines metallurgischen Ofens Blöcke mit vertikalen sich zur Auskleidungsoberfläche hin konisch öffnenden Kanälen vorzusehen, welche obere, kugelige Kammern aufweisen. Die Kammern sollen die Wandung zu einem wirksamen schwarzen Strahler machen und als Resonatoren dienen, welche die Oszillationen der Ofenmedien anregen. Auf diese Weise soll dem strömenden Gas eine niedrig-frequente Schwingung überlagert werden, um somit den Wärmeübergang durch Konvektion zu erhöhen.

Aufgabe der Erfindung ist es, die Verwendung einer Auskleidung bzw. eines Auskleidungssteins der eingangs genannten Art vorzuschlagen, mit welcher der Schmelzprozeß in Glasschmelzöfen hinsichtlich Effektivität und Qualität verbessert werden kann.

Diese Aufgabe wird erfindungsgemäß mit den Merkmalen der Ansprüche 1, 8, 13 oder 14 gelöst.

Mit den erfindungsgemäß getroffenen Maßnahmen wird die von der Auskleidung bzw. dem Auskleidungsstein emittierte Wärmestrahlung relativ zu der von ihr bzw. ihm nur reflektierten Wärmestrahlung erhöht. Damit ist der Anteil der direkt in den Ofeninnenraum reflektierten Wärmestrahlung, welche die gleiche Wellenlänge hat, wie die auf die Ofenwandung aufgetroffene Wärmestrahlung und daher leichter von der Flamme bzw. den in dem Ofeninnenraum vorhandenen Heizgasen reabsorbiert werden kann, verringert. Der Anteil derjenigen Strahlung, welche durch Absorption in der Ofenwandung und Reemission mit veränderter Wellenlänge auf die Glasschmelze auftrifft, ist dagegen erhöht. Aufgrund der veränderten Wellenlänge, dieser gegebenenfalls durch mehrfache Reflektion in den Vertiefungen von der Auskleidung bzw. dem Auskleidungsstein absorbierten und reemittierten Wärmestrahlung wird deren Reabsorption in der Flamme und den Heizgasen des Ofeninnenraums verringert und die Eindringtiefe in die Glasschmelze erhöht.

Bei einem Glasschmelzofen ergibt sich dadurch im Ergebnis einerseits eine Reduzierung der nötigen Temperatur der Auskleidung, da schon bei niedrigerer Temperatur ein zum Schmelzen des Glases erwünschter Wärmeanteil von der Auskleidung in den Ofeninnenraum emittiert wird und die Glasschmelze erreicht. Dies hat niedrigere Abgastemperaturen und geringere Wärmeverluste infolge. Andererseits ergibt sich bei nichtreduzierter Temperatur der Auskleidung bzw. des Auskleidungssteins eine Vergrößerung des Glasschmelzedurchsatzes verbunden mit einer Verbesserung der Glasqualität infolge eines gleichmäßigeren und schnelleren Aufschmelzens des Glasgemenges.

Vorteilhafte Ausgestaltungen der Erfindung ergeben sich aus den Unteransprüchen und der folgenden Beschreibung von Ausführungsbeispielen. In der Zeichnung zeigen:
- Figur 1: zwei Auskleidungssteine in einem Gewölbe eines Ofens im Schnitt längs der Linie I-I nach Figur 2,
- Figur 2: eine Ansicht in Richtung des Pfeiles II nach Figur 1,
- Figur 3: eine alternative Gestaltung der Vertiefung des Auskleidungssteins,
- Figur 4: eine weitere alternative Gestaltung der Vertiefung,
- Figur 5: eine Figur 1 entsprechende Ansicht einer weiteren Ausführungsform, und
- Figur 6: ein weiteres Ausführungsbeispiel,
- Figur 7: ein zusätzliches Ausführungsbeispiel in einer Figur 1 entsprechenden Ansicht, und
- Figur 8: ein Figur 7 ähnliches Ausführungsbeispiel,
- Figur 9: ein Figur 7 ähnliches weiteres Ausführungsbeispiel,
- Figur 10: eine Auskleidung mit hohlkugelförmiger Vertiefung,
- Figur 11: eine Ansicht in Richtung des Pfeiles XI nach Figur 10, und
- Figur 12: eine Alternative zum Ausführungsbeispiel nach Figur 11 bzw. Figur 10.

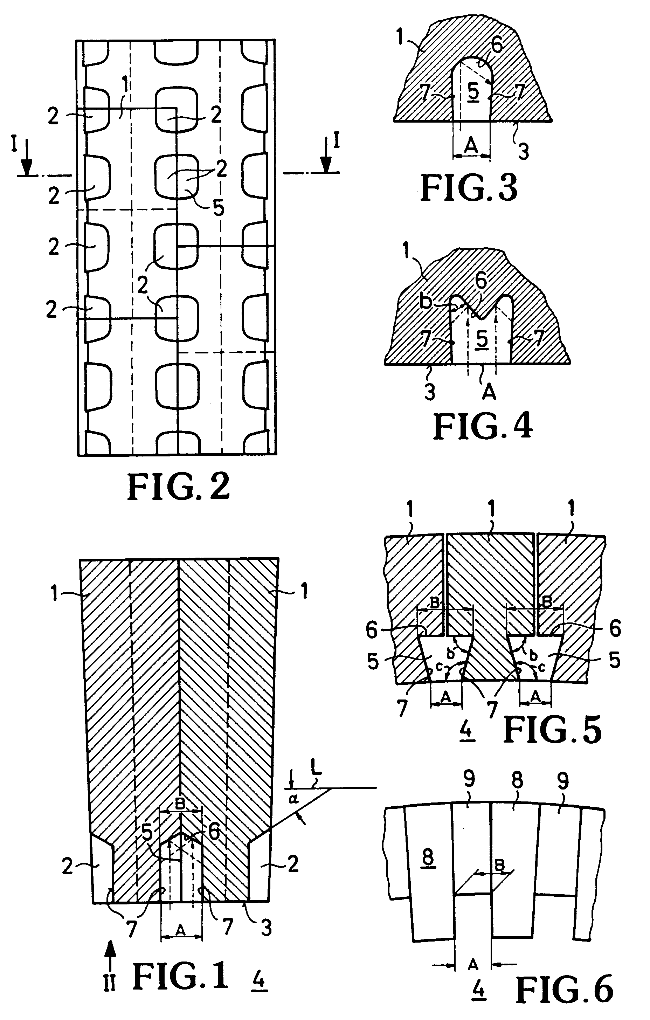

Ein Auskleidungsstein 1 aus einem feuerfesten keramischen Material weist außen mehrere Aussparungen 2 auf. Nach Figur 2 sind acht Aussparungen 2 vorgesehen. Die Aussparungen 2 sind zu derjenigen Oberfläche 3 des Auskleidungssteins 1 offen, die dem Ofeninnenraum 4 zugewandt ist. Die Auskleidungssteine 1 sind so zusammengesetzt, daß zwei benachbarte Aussparungen 2 jeweils eine Vertiefung 5 bilden, die nur zum Ofeninnenraum 4 hin mit einem Öffnungsquerschnitt A offen ist.

Der Öffnungsquerschnitt A ist gleich oder kleiner als der Querschnitt B der Vertiefung 5 im Bereich des Grundes 6 der Vertiefung 5.

Die Vertiefung 5 weist im Anschluß an den Grund 6 Seitenwände 7 auf. Der Grund 6 ist so gestaltet, daß auf ihn aus dem Ofeninnenraum 4 auftreffende Strahlungswärme auf die Seitenwände 7 reflektiert und von diesen absorbiert wird. Dies ist in den Figuren strichliert teilweise dargestellt.

Beim Ausführungsbeispiel nach Figur 1 erstreckt sich der Grund 6 in einem spitzen Winkel a zu einer zur Oberfläche 3 parallelen Linie L, wobei der eine Teil des Grundes 6 von der Aussparung 2 des einen Auskleidungssteins 1 und der andere Teil des Grundes 6 von der Aussparung 2 des benachbarten Auskleidungssteins 1 gebildet ist.

Beim Ausführungsbeispiel nach Figur 3 ist der Grund 6 ähnlich wie beim Ausführungsbeispiel nach Figur 1 gestaltet, jedoch gewölbt konkav geformt.

Beim Ausführungsbeispiel nach Figur 4 ist der Grund 6 konvex geformt. Dabei bildet die Seitenfläche 7 mit dem ihr nahen Teil des Grundes 6 einen spitzen Winkel b. Bei den Ausführungsbeispielen nach den Figuren 1 bis 4 können die Öffnungsquerschnitte A gleich den Querschnitten B sein. Denn durch die Gestaltung des Grundes 6 ist gewährleistet, daß ein großer Teil der am Grund 6 reflektierten Wärmestrahlung von den Seitenwänden 7 absorbiert wird. Durch ein konisches Zusammenlaufen der Seitenwände 7 in der Weise, daß der Öffnungsquerschnitt A kleiner ist als der Querschnitt B, kann je nach der Gestaltung des Grundes 6 die von den Seitenwänden 7 absorbierte Wärme vergrößert werden.

Die Ausführungsbeispiele der Figuren 3 und 4 zeigen auch, daß die Vertiefung 5 nicht durch das Zusammensetzen zweier Auskleidungssteine geschaffen werden muß, sondern auch vollständig in einem Auskleidungsstein liegen kann.

Beim Ausführungsbeispiel nach Figur 5 ist der Öffnungsquerschnitt A deutlich kleiner als der Querschnitt B im Bereich des Grundes 6. Der Grund 6 selbst verläuft hier parallel zur Oberfläche 3. Die Seitenwände 7 bilden mit dem Grund 6 die spitzen Winkel b und mit dem Öffnungsquerschnitt A die stumpfen Winkel c.

Beim Ausführungsbeispiel nach Figur 6 sind die Vertiefungen 5 nicht durch zwei mit Aussparungen 2 versehene Auskleidungssteine 1, sondern durch drei Auskleidungssteine gebildet. Es sind längere Auskleidungssteine 8 und kürzere Auskleidungssteine 9 vorgesehen, wobei jeweils zwischen zwei längeren Auskleidungssteinen 8 ein kürzerer Auskleidungsstein 9 angeordnet ist. Der kürzere Auskleidungsstein 9 bildet den Grund 6, der auch hier wieder konkav oder konvex gestaltet sein kann. Die beiden benachbarten Auskleidungssteine 8 bilden die Seitenwände 7, auf die vom Grund 6 Wärmestrahlung reflektiert wird.

Der Öffnungsquerschnitt A ist auch hier kleiner oder gleich dem Querschnitt B im Bereich des Grundes 6. Dies ist dadurch erreicht, daß die Auskleidungssteine 8 und/oder 9 konisch geformt sind.

Ist der Öffnungsquerschnitt A kleiner als der Querschnitt B im Bereich des Grundes 6, verlaufen also die Seitenwände 7 schräg zur Oberfläche 3, dann reflektieren sie selbst einen Teil der Strahlungswärme, die auf sie von dem Grund 6 reflektiert wurde, in die Vertiefung 5 zurück. Dies unterstützt die gewünschte Absorption der Strahlungswärme im Auskleidungsstein.

Die im Auskleidungsstein aufgrund der beschriebenen Reflexionen der Strahlungswärme absorbierte Wärme wird von den Oberflächen 3 in den Ofeninnenraum 4 emittiert. Insgesamt wird also die von der Auskleidung direkt in den Ofeninnenraum 4 reflektierte Wärmestrahlung herabgesetzt und die von den Auskleidungssteinen emittierte Wärme wird erhöht. Dadurch ist es möglich, die Temperatur der Auskleidung zu reduzieren, da der zum Schmelzen des Glases im Ofeninnenraum 4 erforderliche Wärmeanteil schon bei einer niedrigeren Temperatur emittiert wird.

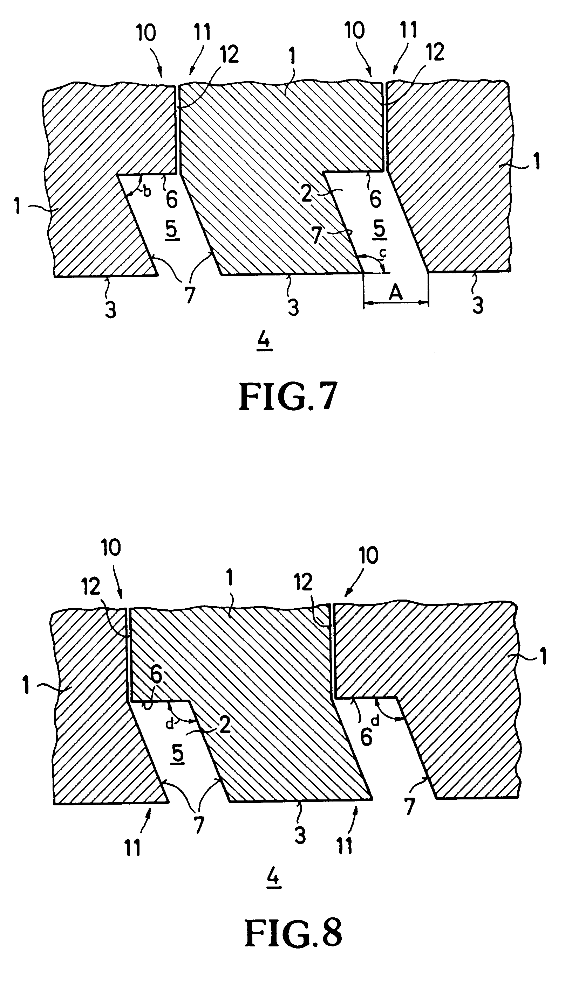

Beim in Figur 7 dargestellten Auskleidungsstein 1 weist dieser - anders als beim Ausführungsbeispiel nach Figur 5 - nur an seiner einen Seite 10 eine Aussparung 2 auf. Diese bildet den Grund 6 und eine der Seitenwände 7. Die andere Seitenwand 7 ist an der der Seite 10 gegenüberliegenden Seite 11 des Auskleidungssteins 1 gebildet. Die an der Aussparung 2 gebildete Seitenwand 7 steht in einem spitzen Winkel b zum Grund 6. Zu dieser Seitenwand 7 verläuft die an der anderen Seite 11 gebildete Seitenwand 7 etwa parallel. Die Vertiefung 5 ist dabei durch den Grund 6 und die eine Seitenwand eines Auskleidungssteins und durch die andere Seitenwand 7 des benachbarten Auskleidungssteins 1 begrenzt.

Das Ausführungsbeispiel nach Figur 8 ist dem der Figur 7 ähnlich. Hier bilden jedoch der Grund 6 und die Seitenwand 7 der Aussparung 2 einen stumpfen Winkel d. Dementsprechend springt die Seitenwand 7 der der Aussparung 2 gegenüberliegenden Seite 11 vor. Dadurch ist einerseits die zwischen zwei benachbarten Auskleidungssteinen bestehende Fuge 12 gegen eine direkte Wärmestrahlung aus dem Ofeninnenraum 4 abgedeckt. Andererseits ist der Verbund der Auskleidungssteine 1 verbessert, da sie sich nicht ohne weiteres senkrecht zur Oberfläche 3 verschieben können.

Auch bei den Ausführungsbeispielen nach den Figuren 7 und 8 wird von dem Grund 6 Strahlungswärme auf die eine Seitenwand 7 reflektiert. Außerdem wird auch aus dem Ofeninnenraum 4 auf die eine Seitenwand 7 treffende Strahlungswärme auf die andere Seitenwand 7 der Vertiefung 5 reflektiert.

Bei den Ausführungsbeispielen nach den Figuren 7 und 8 kann der Öffnungsquerschnitt A auch größer sein als der Querschnitt B im Bereich des Grundes 6, da die eine Seitenwand 7 selbst Wärmestrahlung auf die in der Vertiefung 5 gegenüberliegende Seitenwand 7 reflektiert.

Nach Figur 9 bildet die eine Seitenwand 7 mit der Oberfläche 3 des Auskleidungssteines 1 einen stumpfen Winkel, wogegen die gegenüberliegende Seitenwand 7' mit der Oberfläche 3 einen spitzen Winkel bildet. Auch dadurch entsteht eine Vertiefung 5. In dieser reflektiert die Seitenwand 7 durch den Öffnungsquerschnitt A eintretende Wärmestrahlung auf die gegenüberliegende Seitenwand 7'.

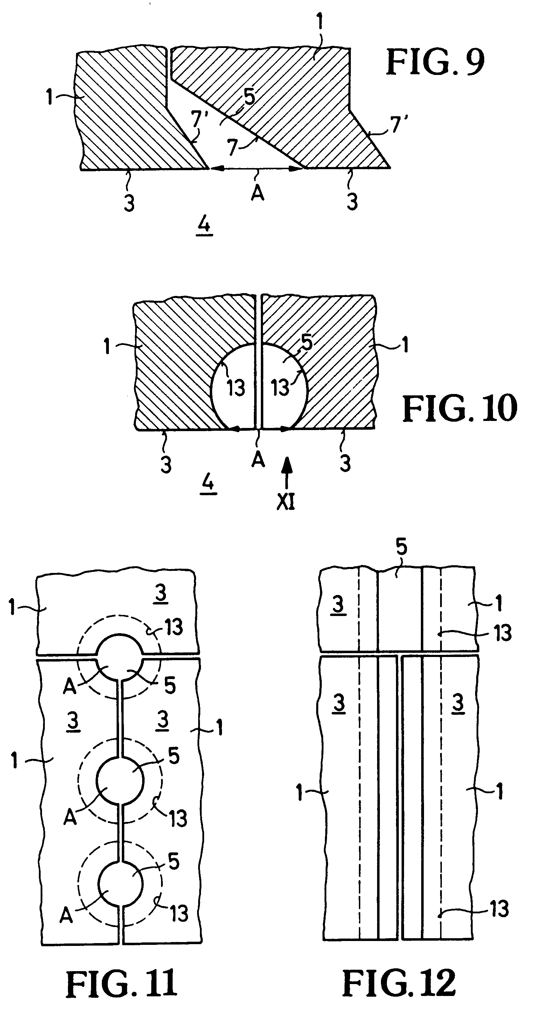

Beim Ausführungsbeispiel nach den Figuren 10 und 11 ist die Vertiefung 5 durch eine konkav gewölbte Wandfläche 13 begrenzt. Sie weist im wesentlichen die Form einer Hohlkugel auf, wobei der Öffnungsquerschnitt A kleiner ist als der größte Durchmesser der Vertiefung 5. Die Vertiefungen 5 können vollständig an dem Auskleidungsstein 1 ausgebildet sein. Sie können auch dadurch entstehen, daß zwei Auskleidungssteine mit entsprechenden konkaven Aussparungen zusammengesetzt werden (vgl. Figur 10/11).

Beim Ausführungsbeispiel nach Figur 12 ist die Vertiefung 5 als Kanal ausgebildet, dessen Querschnitt im wesentlichen kreisförmig ist (vgl. Figur 10).

## Patentansprüche

1. Verwendung einer Auskleidung für einen Glasschmelzofen, welche Vertiefungen (5) mit solchen Wandflächen (6, 7, 7', 13), z.B. Seitenwänden (7, 7') und einem Grund (6), aufweist, daß ein Anteil von aus dem Ofeninnenraum (4) auf die Wandflächen (6, 7, 7', 13) auftreffender Strahlungswärme direkt durch einen Öffnungsquerschnitt (A) der Vertiefung (5) hindurch in den Ofeninnenraum (4) zurückreflektiert und ein Anteil auf einen anderen Bereich der Wandflächen (6, 7, 7', 13) reflektiert wird, um dadurch absorbiert und mit veränderter Wellenlänge reemittiert zu werden,
**dadurch gekennzeichnet**,
daß die Wandflächen (6, 7, 7', 13) der Vertiefung (5) zur Verringerung des Anteils der direkten Reflexion in den Ofeninnenraum (4) geometrisch so konkav, insbesondere kreisförmig gewölbt, gestaltet sind, daß der Öffnungsquerschnitt (A) in der Auskleidungsoberfläche (3) gleich oder kleiner als der Querschnitt (B) der Vertiefung (5) im Bereich des Grundes (6) oder kleiner als der größte Durchmesser der Vertiefung (5) ist.

2. Verwendung einer Auskleidung nach Anspruch 1, wobei die Vertiefung (5) von wenigstens einer der Seitenwände (7, 7') und einem Grund (6) gebildet ist und wenigstens eine der Seitenwände (7, 7') und der Grund (6) in einem Winkel zueinander stehen,
**dadurch gekennzeichnet**,
daß die Vertiefung (5) von drei benachbarten Auskleidungssteinen (8, 9) gebildet ist, wobei ein mittlerer Auskleidungsstein (9) den Grund (6) und die beiden anderen Auskleidungssteine (6) die Seitenwände (7, 7') bilden.

3. Verwendung einer Auskleidung nach Anspruch 2,
**dadurch gekennzeichnet**,
daß der mittlere Auskleidungsstein (9) und/oder die beiden anderen Auskleidungssteine (8) sich konisch verjüngen, so daß der Öffnungsquerschnitt (A) in der Auskleidungsoberfläche (3) kleiner ist als der Querschnitt (B) der Vertiefung (5) im Bereich des Grundes (6).

4. Verwendung einer Auskleidung nach einem der Ansprüche 1 bis 3,
**dadurch gekennzeichnet**,
daß der Grund (6) der Vertiefung (5) konkav oder konvex verläuft.

5. Verwendung einer Auskleidung nach einem der Ansprüch 1 bis 4,
**dadurch gekennzeichnet**,
daß eine der Seitenwände (7,) und der an diese anschließende Teil des Grundes (6) im spitzen Winkel (b) zueinander stehen.

6. Verwendung einer Auskleidung nach einem der Ansprüche 1 bis 5,
**dadurch gekennzeichnet**,
daß eine der Seitenwände (7, 7') und der an diese anschließende Teil des Grundes (6) in einem stumpfen Winkel (90° + a; d) zueinander stehen.

7. Verwendung einer Auskleidung nach einem der Ansprüche 1 bis 6,
dadurch gekennzeichnet,
daß eine der Seitenwände (7, 7') im stumpfen Winkel (c) zum Öffnungsquerschnitt (A) der Vertiefung (5) steht.

8. Verwendung einer Auskleidung für einen Glasschmelzofen, welche Vertiefungen (5) mit solchen Wandflächen (6, 7, 7'), z.B. Seitenwänden (7, 7') und einem Grund (6), aufweist, daß ein Anteil von aus dem Ofeninnenraum (4) auf die Wandflächen (6, 7, 7') auftreffender Strahlungswärme direkt durch einen Öffnungsquerschnitt (A) der Vertiefung (5) hindurch in den Ofeninnenraum (4) zurückreflektiert und ein Anteil auf einen anderen Bereich der Wandflächen (6, 7, 7') reflektiert wird, um dadurch absorbiert und mit veränderter Wellenlänge reemittiert zu werden,
**dadurch gekennzeichnet**,
daß die Wandflächen (7, 7') der Vertiefung (5) zur Verringerung des Anteils der direkten Reflexion in den Ofeninnenraum (4) geometrisch so gestaltet sind, daß eine erste Seitenwand (7) mit der Auskleidungsoberfläche (3) einen stumpfen Winkel (c) und eine zweite Seitenwand (7') mit der Auskleidungsoberfläche (3) einen spitzen Winkel bildet.

9. Verwendung einer Auskleidung nach einem der Ansprüche 1 und 4 bis 8,
**dadurch gekennzeichnet,**
daß die Vertiefung (5) durch eine Aussparung (2) in einem Auskleidungsstein und einem entsprechend geformten, benachbart angeordneten Auskleidungsstein, gegebenenfalls durch eine in diesem letzten geformte weitere Aussparung (2), gebildet wird.

10. Verwendung einer Auskleidung nach Anspruch 9,
**dadurch gekennzeichnet**,
daß die Aussparung (2) an der einen Seite (10) eines Auskleidungssteins den Grund (6) und eine der Seitenwände (7, 7') der Vertiefung bildet, und daß ein benachbart angeordneter Auskleidungsstein mit seiner gegenüberliegenden Seite (11) die andere Seitenwand (7, 7') der Vertiefung (5) bildet.

11. Verwendung einer Auskleidung nach Anspruch 10,
**dadurch gekennzeichnet**,
daß die an der Aussparung (2) gebildete Seitenwand (7) in einem spitzen Winkel (b) oder in einem stumpfen Winkel (d) zum Grund (6) steht, und daß die an der gegenüberliegenden Seite (11) ausgebildete Seitenwand (7') etwa parallel zur erstgenannten Seitenwand (7) steht.

12. Verwendung einer Auskleidung nach Anspruch 9,
**dadurch gekennzeichnet**,
daß die Aussparungen (2) in einem Auskleidungsstein im wesentlichen halbkugelförmig, viertelkugelförmig oder im wesentlichen als halbkreisförmiger Kanal ausgebildet sind.

13. Verwendung eines Auskleidungssteins für einen Glasschmelzofen, welcher wenigstens eine Vertiefung (5) mit einer solchen Wandfläche (13) aufweist, daß ein Anteil von aus dem Ofeninnenraum (4) auftreffender Strahlungswärme direkt durch einen Öffnungsquerschnitt (A) der Vertiefung (5) hindurch in den Ofeninnenraum (4) zurückreflektiert und ein Anteil auf einen anderen Bereich der Wandflächen (13) reflektiert wird, um dadurch absorbiert und mit veränderter Wellenlänge reemittiert zu werden,
**dadurch gekennzeichnet**,
daß die Wandfläche (13) der Vertiefung (5) zur Verringerung des Anteils der direkten Reflexion der Strahlungswärme in den Ofeninnenraum (4) im wesentlichen eine Hohlkugel bildet und der Öffnungsquerschnitt (A) in der Auskleidungsoberfläche (3) kleiner als der maximale Querschnitt der Hohlkugel ist.

14. Verwendung eines Auskleidungsteins für einen Glasschmelzofen, welcher wenigstens eine Vertiefung (5) mit solchen Wandflächen (6, 7), nämlich mindestens zwei Seitenwänden (7) und einen Grund (6) aufweist, daß ein Anteil von aus dem Ofeninnenraum (4) auf die Wandflächen (6, 7) auftreffender Strahlungswärme direkt durch einen Öffnungsquerschnitt (A) der Vertiefung (5) hindurch in den Ofeninnenraum (4) zurückreflektiert und ein Anteil auf einen anderen Bereich der Wandflächen (6, 7) reflektiert wird, um dadurch absorbiert und mit veränderter Wellenlänge reemittiert zu werden,
**dadurch gekennzeichnet**,
daß die Wandflächen (6, 7) der Vertiefung (5) zur Verringerung des Anteils der direkten Reflexion der Strahlungswärme in den Ofeninnenraum (4) so zueinander stehen, daß der Öffnungsquerschnitt (A) in der Auskleidungsoberfläche (3) gleich oder kleiner als der Querschnitt (B) der Vertiefung (5) im Bereich des Grundes (6) ist.

15. Verwendung eines Auskleidungssteins nach Anspruch 14,
**dadurch gekennzeichnet**,
daß der Grund (6) konkav oder konvex verläuft.

16. Verwendung eines Auskleidungssteins nach einem der Ansprüche 14 oder 15,
**dadurch gekennzeichnet**,
daß die eine der Seitenwände (7,) und der an diese anschließende Teil des Grundes (6) in einem spitzen Winkel (b) zueinander stehen.

17. Verwendung eines Auskleidungssteins nach einem der Ansprüche 14 bis 16,
**dadurch gekennzeichnet**,
daß die eine der Seitenwände (7,) und der an diese anschließende Teil des Grundes (6) in einem stumpfen Winkel (90° + a) zueinander stehen.

18. Verwendung eines Auskleidungssteins nach einem der Ansprüche 14 bis 16,
**dadurch gekennzeichnet**,
daß die eine der Seitenwände (7, 7') in einem stumpfen Winkel (c) zum Öffnungsquerschnitt (A) der Vertiefung (5) steht.

## Claims

1. Use of a lining for a glass melting furnace which has recesses (5) with such wall surfaces (6, 7, 7', 13), e.g. side walls (7, 7') and a base (6), that a proportion of radiant heat from the interior of the furnace (4) incident on the wall surfaces (6, 7, 7', 13) is reflected back directly through an opening cross-section (A) of the recess (5) into the interior of the furnace (4) and a proportion is reflected onto another region of the wall surfaces (6, 7, 7', 13) in order thereby to be absorbed and to be re-emitted with an altered wavelength, characterised in that for the purpose of reducing the proportion of direct reflection into the interior of the furnace (4), the wall surfaces (6, 7, 7', 13) of the recess (5) are geometrically of such concave shape, in particular of circular domed shape, that the opening cross-section (A) in the lining surface (3) is equal to or smaller than the cross-section (B) of the recess (5) in the region of the base (6) or smaller than the largest diameter of the recess (5).

2. Use of a lining as claimed in Claim 1, the recess (5) being defined by at least one of the side walls (7, 7') and a base (6) and at least one of the side walls (7, 7') and the base (6) extending at an angle to one another, characterised in that the recess (5) is defined by three adjacent lining bricks (8, 9), a central lining brick (9) defining the base (6) and the two other lining bricks (6) defining the side walls (7, 7').

3. Use of a lining as claimed in Claim 2, characterised in that the middle lining brick (9) and/or the two other lining bricks (8) taper conically so that the opening cross-section (A) in the lining surface (3) is smaller than the cross-section (B) of the recess (5) in the region of the base (6).

4. Use of a lining as claimed in one of Claims 1 to 3, characterised in that the base (6) of the recess (5) is of concave or convex shape.

5. Use of a lining as claimed in one of Claims 1 to 4, characterised in that one of the side walls (7) and the portion of the base (6) adjacent to it extend at an acute angle (b) to one another.

6. Use of a lining as claimed in one of Claims 1 to 5, characterised in that one of the side walls (7, 7') and the portion of the base (6) adjacent to it extend at an obtuse angle (90° + a; d).

7. Use of a lining as claimed in one of Claims 1 to 6, characterised in that one of the side walls (7, 7') extends at an obtuse angle (c) to the opening cross-section (A) of the recess (5).

8. Use of a lining for a glass melting furnace which has recesses (5) with such wall surfaces (6, 7, 7'), e.g. side walls (7, 7') and a base (6), that a proportion of radiant heat from the interior of the furnace (4) incident on the wall surfaces (6, 7, 7') is reflected directly through an opening cross-section (A) of the recess (5) back into the interior of the furnace (4) and a proportion is reflected onto another region of the wall surfaces (6, 7, 7') in order thereby to be absorbed and to be re-emitted with an altered wavelength, characterised in that for the purpose of reducing the proportion of the direct reflection into the interior of the furnace (4), the wall surfaces (7, 7') of the recess (5) are geometrically so shaped that a first side wall (7) defines an obtuse angle (c) with the lining surface (3) and a second side wall (7') defines an acute angle with the lining surface (3).

9. Use of a lining as claimed in one of Claims 1 and 4 to 8, characterised in that the recess (5) is defined by a hollow (2) in one lining brick and an appropriately shaped adjacent lining brick, optionally by a further hollow (2) formed in the latter.

10. Use of a lining as claimed in Claim 9, characterised in that the hollow (2) on the one side (10) of a lining brick defines the base (6) and one of the side walls (7, 7') of the recess and that an adjacent lining brick defines the other side wall (7, 7') of the recess with its opposite side (11).

11. Use of a lining as claimed in Claim 10, characterised in that the side wall (7) defined on the hollow (2) extends at an acute angle (b) or an obtuse angle (d) to the base (6) and that the side wall (7') on the opposite side (11) extends approximately parallel to the first mentioned side wall (7).

12. Use of a lining as claimed in Claim 9, characterised in that the hollows (2) are formed in a lining brick in substantially hemispherical or quarterspherical shape or substantially as a semi-circular-shaped channel.

13. Use of a lining brick for a glass melting furnace which has at least one recess (5) with such side walls (13) that a proportion of incident radiant heat from the interior of the furnace (4) is reflected directly through an opening cross-section (A) of the recess (5) back into the interior of the furnace (4) and a proportion is reflected onto another region of the wall surfaces in order thereby to be absorbed and to be re-emitted with an altered wavelength, characterised in that for the purpose of reducing the proportion of the direct reflection of the radiant heat into the interior of the furnace (4), the wall surface (13) of the recess (5) constitutes substantially a hollow sphere and the opening cross-section (A) in the lining surface (3) is smaller than the maximum cross-section of the hollow sphere.

14. Use of a lining brick for a glass melting furnace which has at least one recess (5) with such wall surfaces (6, 7), namely at least two side walls (7) and a base (6), that a proportion of radiant heat from the interior of the furnace (4) incident on the wall surfaces (6, 7) is reflected directly through an opening cross-section (A) of the recess (5) back into the interior of the furnace (4) and a proportion is reflected onto another region of the wall surfaces (6, 7) in order thereby to be absorbed and to be re-emitted with an altered wavelength, characterised in that for the purpose of reducing the proportion of the direct reflection of the radiant heat into the interior of the furnace (4), the wall surfaces (6, 7) of the recess (5) extend with respect to one another such that the opening cross-section (A) in the lining surface (3) is equal to or smaller than the cross-section (B) of the recess (5) in the region of the base (6).

15. Use of a lining brick as claimed in Claim 14, characterised in that the base (6) is of concave or convex shape.

16. Use of a lining brick as claimed in one of Claims 14 or 15, characterised in that the one of the side walls (7) and the portion of the base (6) adjacent to it extend at an acute angle (b) to one another.

17. Use of a lining brick as claimed in one of Claims 14 to 16, characterised in that the one of the side walls (7) and the portion of the base (6) adjacent to it extend at an obtuse angle (90° + a) to one another.

18. Use of a lining brick as claimed in one of Claims 14 to 16, characterised in that the one of the side walls (7, 7') extends at an obtuse angle (c) to the opening cross-section (A) of the recess (5).

## Revendications

1. Utilisation d'un garnissage pour un four de verrerie, lequel présente des niches (5) ayant des surfaces de paroi (6, 7, 7', 13), p.ex. des parois latérales (7, 7') et un fond (6) configurés de telle façon qu'une partie de la chaleur rayonnante venant de l'espace Intérieur (4) du four et contactant les surfaces de paroi (6, 7, 7', 13) soit réfléchie en retour directement dans l'espace intérieur (4) du four, autravers d'une section d'ouverture (A) de la niche (5), et qu'une autre partie soit réfléchie sur une autre zone des surfaces de paroi (6, 7, 7', 13), pour être absorbée par celles-ci et réémise avec une longueur d'onde modifiée,
caractérisée en ce qu'en vue de réduire la part de réflexion directe dans l'espace intérieur (4) du four, les surfaces de paroi (6, 7, 7', 13') de la niche (5) ont une configuration géométrique concave, en étant en particulier cintrées, de telle sorte que la section d'ouverture (A) prévue dans la surface (3) du garnissage soit égale ou inférieure à la section (B) de la niche (5) dans la zone du fond (6), ou plus petite que la plus grand diamètre de la niche (5).

2. Utilisation d'un garnissage suivant la revendication 1, selon laquelle la niche (5) est formée par au moins une des parois latérales (7, 7') et un fond (6), et au moins une des parois latérales (7, 7') et le fond (6) décrivent un angle ontre eux, caractérisée en ce que la niche (5) est formée par trois briques de garnissage (8, 9) voisines, une brique de garnissage médiane (9) formant le fond (6), et les deux autres briques de garnissage (8) formant les parois latérales (7, 7').

3. Utilisation d'un garnissage suivant la revendication 2, caractérisée en ce que la brique de garnissage médiane (9) et/ou les deux autres briques de garnissage (8) s'effilent en cône, de sorte que la section d'ouverture (A) prévue dans le surface (3) du garnissage est plus petite que la section (B) de la niche (5) dans la zone du fond (6).

4. Utilisation d'un garnissage suivant l'une des revendications 1 à 3, caractérisée en ce que le fond (6) de la niche (5) est concave ou convexe.

5. Utilisation d'un garnissage suivant l'une des revendications 1 à 4, caractérisée en ce que l'une des parois latérales (7) et la partie du fond (6) qui vient à sa suite décrivent entre elles un angle aigu (b).

6. Utilisation d'un garnissage suivant l'une des revendication 1 à 5, caractérisée en ce que l'une des parois latérales (7, 7') et la partie du fond (6) qui vient à sa suite décrivent entre elles un angle obtus (90° + a).

7. Utilisation d'un garnissage suivant l'une des revendications 1 à 6, caractérisée en ce que l'une des parois latérales (7, 7') fait un angle obtus (c) avec la section d'ouverture (A) de la niche (5).

8. Utilisation d'un garnissage pour un four de verrerie, lequel présente des niches (5) ayant des surfaces de paroi (6, 7, 7'), p.ex. des parois latérales (7, 7') et un fond (6) configurés de telle façon qu'une partie de la chaleur rayonnante venant de l'espace intérieur (4) du four et contactant les surfaces de paroi (6, 7, 7') soit réfléchie en retour directement dans l'espace intérieur (4) du four, au-travers d'une section d'ouverture (A) de la niche (5), et qu'une autre partie est réfléchie sur une autre zone des surfaces de paroi (6, 7, 7'), pour être absorbée par celles-ci et réémise avec une longueur d'onde modifiée, caractérisée en ce qu'en vue de réduire la part de réflexion directe dans l'espace intérieur (4) du four, les surfaces de paroi (7, 7') de la niche ont une configuration géométrique telle qu'une première paroi latérale (7) décrit un angle obtus (c) avec la surface (3) du garnissage, et une seconde paroi latérale (7') décrit un angle aigu avec la surface (3) du garnissage.

9. Utilisation d'un garnissage suivant l'une des revendications 1 à 8, caractérisée en ce que la niche (5) est formée par une réservation (2) ménagée dans une brique de garnissage et dans une brique de garnissage de forme correspondante qui lui est adjacente, le cas échéant par une autre réservation (2) ménagée dans cette dernière.

10. Utilisation d'un garnissage suivant la revendication 9, caractérisée en ce que la réservation (2) ménagée sur une face (10) d'une brique de garnissage forme le fond (6) et l'une des parois latérales (7, 7') de la niche, et en ce qu'une brique de garnissage voisine constitue, avec sa face en regard (11), l'autre paroi latérale (7, 7') de la niche (5).

11. Utilisation d'un garnissage suivant la revendication 10, caractérisée en ce que la paroi latérale (7) formée sur la réservation (2) décrit un angle aigu (b) ou un angle obtus (d) avec le fond (6), et en ce que la paroi latérale (7') formée sur le face en regard (11) est sensiblement parallèle à la première paroi latérale (7).

12. Utilisation d'un garnissage suivant la revendication 9, caractérisée en ce que les réservations (2) ménagées dans une brique de garnissage ont pour ainsi dire la forme d'une demisphère, d'un quart de sphère ou pour ainsi dire de canal demi-circulaire.

13. Utilisation d'une brique de garnissage pour un four de verrerie, laquelle présente ou moins une niche (5) ayant une surface de paroi (13) configurée de telle façon qu'une partie de la chaleur rayonnante venant de l'espace intérieur (4) du four soit réfléchie en retour directement dans l'espace intérieur (4) du four, au-travers d'une section d'ouverture (A) de la niche (5), et qu'une autre partie soit réfléchie sur une autre zone des surfaces de paroi (13), peur être absorbée par celles-ci et réémise avec une longueur d'onde modifiée, caractérisée en ce qu'en vue de réduire la part de réflexion directe de la chaleur rayonnante dans l'espace intérieur (4) du four, la surface de paroi (13) forme pour ainsi dire une sphère creuse, et en ce que le section d'ouverture (A) prévue dans la surface (3) du garnissage est plus petite que la section maximale de la sphère creuse.

14. Utilisation d'une brique de garnissage pour un four de verrerie, laquelle présente au moins une niche (5) ayant des surfaces de paroi (6, 7), à savoir au moins deux parois latérales (7) et un fond (6) configurés de telle façon qu'une partie de la chaleur rayonnante venant de l'espace intérieur (4) du four et contractant les surfaces de paroi (6, 7) soit réfléchie en retour directement dans l'espace intérieur (4) du four, au-travers d'une section d'ouverture (A) de la niche (5), et qu'une autre partie soit réfléchie sur une autre zone des surfaces de paroi (6, 7) pour être absorbée par celles-ci et réémise avec une longueur d'onde modifiée,
caractérisée en ce qu'en vue de réduire la part de réflexion directe de la chaleur rayonnante dans l'espace intérieur (4) du four, les surfaces de paroi (6, 7) sont mises on rapport entre elles de telle façon que le section d'ouverture (A) prévue dans la surface (3) du garnissage soit égale ou plus petite que la section (B) de la niche (5) dans la zone du fond (6).

15. Utilisation d'une brique de garnissage suivant la revendication 14, caractérisée en ce que le fond (6) est concave ou convexe.

16. Utilisation d'une brique de garnissage suivant l'une des revendications 14 ou 15, caractérisée en ce que l'une des parois latérales (7) et la partie du fond (6) qui vient à sa suite décrivent entra elles un angle aigu (b).

17. Utilisation d'une brique de garnissage suivant l'une des revendications 14 à 16, caractérisée en ce que l'une des parois latérales (7) et la partie du fond (6) qui vient à sa suite décrivent entre elles un angle obtus (90° + a).

18. Utilisation d'une brique de garnissage suivant l'une des revendications 14 à 16, caractérisée en ce que l'une des parois latérales (7, 7') fait un angle obtus (c) avec la section d'ouverture (A) de la niche (5).
